# EUROPÄISCHE PATENTSCHRIFT

(11) **EP 1 151 845 B1**
(45) Veröffentlichungstag und Bekanntmachung des Hinweises auf die Patenterteilung: **16.02.2005**
(21) Anmeldenummer: 01107124.8
(22) Anmeldetag: 22.03.2001
(51) Int. Cl.: B29C 47/10, B29C 47/92, B29C 69/02

(54) **Anlage zur Aufbereitung und Weiterverarbeitung von thermoplastischem Kunststoff und Verfahren zu deren Betrieb**
Installation for preparing and further processing a thermoplastic material and method for operating said installation
Installation pour la préparation et le traitement ultérieur d'une matière thermoplastique et méthode pour faire fonctionner cette installation

(30) Priorität: 04.05.2000 DE 10021730
(43) Veröffentlichungstag der Anmeldung: 07.11.2001
(73) Patentinhaber: Coperion Werner & Pfleiderer GmbH & Co. KG, 70469 Stuttgart (DE)
(72) Erfinder: Kapfer, Klaus, 71229 Leonberg (DE); Schwendemann, Daniel, 70839 Gerlingen (DE)
(74) Vertreter: Rau, Manfred, Dr. Dipl.-Ing.

(56) Entgegenhaltungen:
- WO-A-01/54877
- GB-A- 1 517 851
- US-A- 3 746 489
- US-A- 4 449 913
- US-A- 4 678 420
- US-A- 5 127 450
- US-A- 5 591 384

## Beschreibung

Die Erfindung betrifft eine Anlage zur Aufbereitung und Weiterverarbeitung von thermoplastischem Kunststoff und ein Verfahren zu deren Betrieb.

In derartigen Anlagen vorhandene Schnecken-Compoundier-Maschinen, in denen die weiterzuverarbeitenden thermoplastischen Kunststoffe aufbereitet werden, sind bisher immer kontinuierlich betrieben worden. Hierbei werden die Kunststoffe, beispielsweise in Granulatform, zugeführt, aufgeschmolzen und mit Additiven, Füllstoffen und Verstärkungsstoffen, beispielsweise Glas-Rovings, vermischt. Andererseits werden nachgeordnete Verarbeitungs-Einheiten, beispielsweise Pressen oder Spritzgießmaschinen, taktweise, also diskontinuierlich, also in einer intermittierenden Betriebsweise, betrieben.

Aufgrund dieser unterschiedlichen Betriebsweisen ist es nicht möglich, derartige Verarbeitungs-Einheiten mit Schnecken-Compoundier-Maschinen derart zu kombinieren, daß die Weiterverarbeitung des in der Schnecken-Compoundier-Maschine aufgeschmolzenen und aufbereiteten Kunststoffes in einer Wärme, d.h. ohne zwischenzeitliche Abkühlung und erneute Aufheizung, erfolgt. Bei der Herstellung von Platten oder Folien ist dagegen die Herstellung in einer Wärme, d.h. die direkte kontinuierliche Weiterverarbeitung des in der Schnecken-Compoundier-Maschine aufbereiteten und aufgeschmolzenen Kunststoffes, möglich und bekannt.

Aus der nicht vorveröffentlichten, nur einen Stand der Technik nach Art. 54(3) EPÜ bildenden WO 01/54877 A1 ist eine Anlage zur Aufbereitung und Weiterverarbeitung von thermoplastischem Kunststoff bekannt, bei der ein Extruder zur Aufbereitung des Kunststoffs einer Spritzgießmaschine vorgeschaltet ist. Der Extruder arbeitet kontinuierlich und wird kontinuierlich mit den aufzubereitenden Materialien beschickt. Die Beschickung der nachgeordneten Spritzgießmaschine erfolgt ebenfalls kontinuierlich. Das Spritzen des Kunststoffes aus der Spritzgießmaschine in eine Form erfolgt taktweise in der Weise, dass die Schnecke der Spritzgießmaschine mit zunehmender Zugabe des zu spritzenden Kunststoffes zurückgezogen und dann als Kolben zum Ausspritzen des aufgeschmolzenen Kunststoffes in die Spritzform verschoben wird. Es handelt sich hierbei um die seit langem bekannte Spritzgießtechnik.

Aus der US 5,591,384 A ist eine Spritzgießmaschine bekannt, die in der bereits vorstehend geschilderten Weise aufgebaut ist und betrieben wird.

Der Erfindung liegt die Aufgabe zugrunde, eine Anlage der allgemeinen Gattung und ein Verfahren zu deren Betrieb so auszugestalten, daß die taktweise Weiterverarbeitung des aufgeschmolzenen und aufbereiteten Kunststoffes in einer Wärme möglich ist.

Diese Aufgabe wird erfindungsgemäß durch die Merkmale des Anspruches 1 gelöst. Der Kern der Erfindung liegt darin, daß auch die Schnecken-Compoundier-Maschine mit ihren Peripherie-Aggregaten, wie z.B. Dosiereinrichtungen, ebenfalls intermittierend betrieben wird, und zwar exakt in der Taktzeit der Verarbeitungs-Einheit. Damit die Schnecken-Compoundier-Maschine hierbei störungsfrei arbeitet und der aufgeschmolzene und aufbereitete Kunststoff stets die gleiche Temperatur und Qualität hat, ist es von besonderem Vorteil, wenn die Merkmale der Ansprüche 2 und/oder 3 vorhanden sind.

Aus den Ansprüchen 4 bis 6 ergibt sich, daß abweichend vom Stand der Technik kurze Taktzeiten beim Betrieb der Schnecken-Compoundier-Maschine möglich sind.

Weitere vorteilhafte Ausgestaltungen und Weiterbildungen der erfindungsgemäßen Anlage ergeben sich aus den Ansprüchen 7 bis 14.

Die erfindungsgemäße Aufgabe wird weiterhin durch ein Verfahren nach Anspruch 15 gelöst, das durch die Ansprüche 16 und 17 vorteilhaft ausgestaltet wird.

Weitere Merkmale, Vorteile und Einzelheiten der Erfindung ergeben sich aus der nachfolgenden Beschreibung zweier Ausführungsbeispiele anhand der Zeichnung. Es zeigt
- Fig. 1: eine Anlage nach der Erfindung mit einer Presse als Verarbeitungs-Einheit,
- Fig. 2: eine Anlage nach der Erfindung mit einer Spritzgießmaschine als Verarbeitungs-Einheit,
- Fig. 3: ein Betriebs-Diagramm der Anlage, in dem die Drehzahlen über der Zeit aufgetragen sind und
- Fig. 4: einen Querschnitt durch den Extruder gemäß der Schnittlinie IV-IV in Fig. 1.

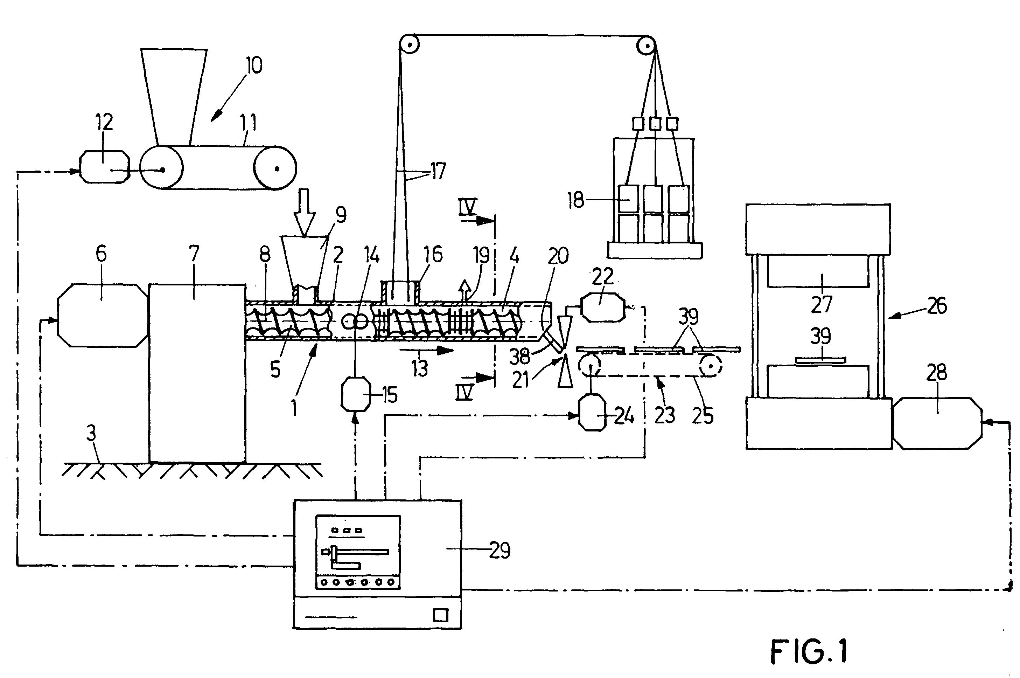

Die in Fig. 1 dargestellte Anlage weist einen Doppel-Schnecken-Extruder 1 als Schnecken-Compoundier-Maschine auf, dessen Gehäuse 2 auf einem Fundament 3 abgestützt ist. In im Gehäuse 2 ausgebildeten Bohrungen 4, 4' sind zwei Schnecken 5, 5' angeordnet. Die Schnecken 5, 5' werden von einem Elektro-Motor 6 über ein Verzweigungs-Getriebe 7 um ihre jeweilige Achse 8, 8' drehend angetrieben.

Am stromaufwärtigen Ende des Gehäuses 2 ist ein Zuführtrichter 9 für aufzubereitenden Kunststoff angeordnet, dem der Kunststoff über eine erste Dosiereinrichtung 10 zuführbar ist. Bei der ersten Dosiereinrichtung 10 kann es sich um eine Dosier-Bandwaage handeln, deren endloses Dosierband 11 von einem ersten Dosier-Motor 12 antreibbar ist. Dem Zuführtrichter 9 ist in Förderrichtung 13 der Schnecken 5, 5' eine zweite Dosiereinrichtung 14 nachgeordnet, die in das Gehäuse 2 einmündet. Dabei kann es sich um eine Dosier-Doppel-Schnecke handeln. Sie wird von einem zweiten Dosier-Motor 15 angetrieben.

In Förderrichtung 13 stromabwärts von der zweiten Dosiereinrichtung 14 ist eine Zuführ-Öffnung 16 für endlose Rovings 17 vorgesehen, über die von Spulen 18 abgewickelte Rovings 17 in das Gehäuse 2 eingezogen werden können. Dieser Zuführ-Öffnung 16 nachgeordnet ist noch eine Entgasungs-Öffnung 19 vorgesehen.

Am stromabwärtigen Ende des Gehäuses 2 ist ein Spritzkopf 20 vorgesehen, dem wiederum eine Schneide-Einheit 21 nachgeordnet ist, die von einem elektromotorischen Schneide-Antrieb 22 antreibbar ist. Diesem zugeordnet ist eine Transport-Einrichtung 23, die ein mittels eines Elektro-Motors 24 antreibbares Transport-Band 25 aufweist. Der Transport-Einrichtung 23 ist wiederum eine Presse 26 als Verarbeitungseinheit nachgeordnet. Die Presse 26 weist einen Preßstempel 27 auf, der in üblicher Weise hydraulisch betätigbar ist, wobei die hydraulische Versorgung über eine mittels eines Elektro-Motors 28 antreibbare Hydraulikpumpe erfolgt. Die Presse 26 arbeitet taktweise.

Der Doppel-Schnecken-Extruder 1 ist beispielsweise aus der EP 0 852 533 (entspr. US-PS 6,042,260) bekannt. Die Zuführung von Rovings 16 ist ebenfalls bekannt, und zwar aus der EP 0 835 175 (entspr. US-PS 5,879,602).

Der Motor 6 zum Antrieb der Schnecken 5, 5', der erste Dosier-Motor 12 zum Antrieb der ersten Dosiereinrichtung 10, der zweite Dosier-Motor 15 zum Antrieb der zweiten Dosiereinrichtung 14, der elektromotorische Schneide-Antrieb 22, der Elektro-Motor 24 zum Antrieb der Transport-Einrichtung 23 und der Elektro-Motor 28 zum Antrieb der Presse 26 werden von einer gemeinsamen Steuereinheit 29 angesteuert, mit der sie über strichpunktiert dargestellte Steuerleitungen verbunden sind.

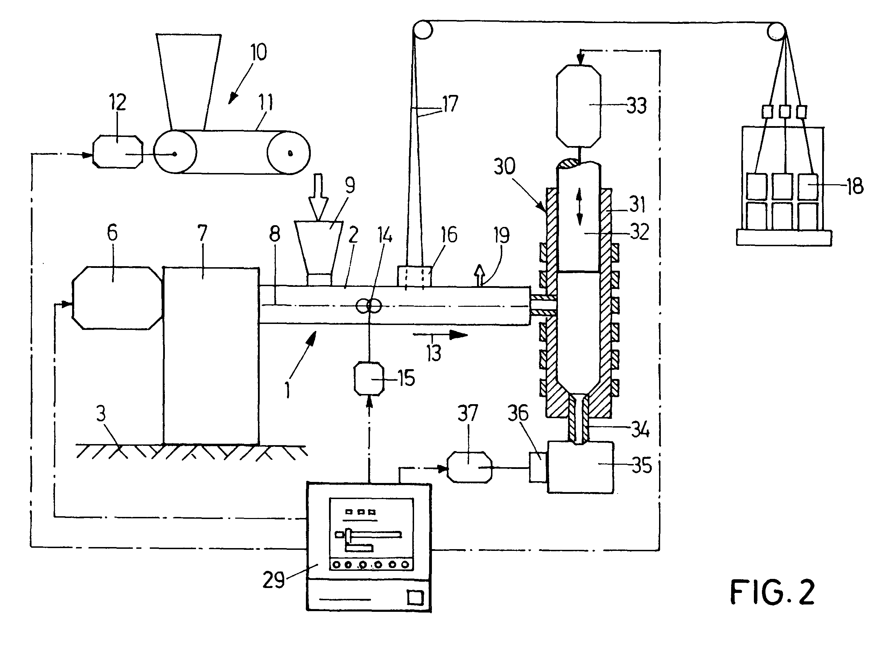

Bei der Ausführungsform nach Fig. 2 ist der Extruder 1 in gleicher Weise ausgestaltet wie bei dem Ausführungsbeispiel nach Fig. 1. Diesem ist eine Verarbeitungseinheit in Form einer Kolben-Spritzgießmaschine 30 nachgeordnet, die einen mit dem Gehäuse 2 verbundenen Spritzzylinder 31 aufweist, in dem ein Spritzkolben 32 taktweise antreibbar angeordnet ist. Der Spritzkolben 32 wird in üblicher Weise hydraulisch angetrieben. Zum Antrieb einer zugehörigen hydraulischen Druckversorgungseinheit ist ein Elektro-Motor 33 vorgesehen, der ebenfalls von der Steuer-Einheit 29 angesteuert wird. Aus dem Spritzzylinder 31 mündet eine Düse 34 in eine Spritzgußform 35, deren Ausstoßvorrichtung 36 von einem Ausstoß-Antrieb 37 betätigt wird, der ebenfalls von der Steuer-Einheit 29 ansteuerbar ist.

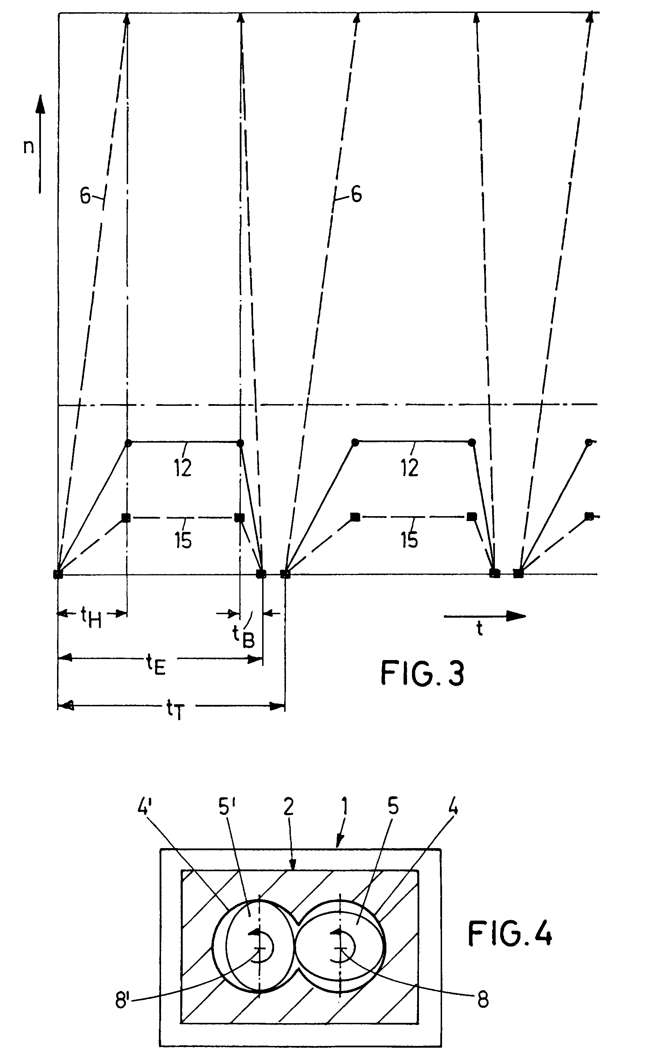

Die Wirkungsweise der Anlagen nach den Fig. 1 und 2 wird nachfolgend unter Bezugnahme auf Fig. 3 näher erläutert, die die Drehzahlen n der Motoren 6, 12, 15 über die Zeit t zeigt. Mittels der ersten Dosiereinrichtung 10 wird dem Extruder 1 ein Polymer, beispielsweise in Granulatform, zudosiert und mittels der Schnecken 5, 5' geschert und im übrigen unter Wärmezufuhr aufgeschmolzen. Mittels der zweiten Dosiereinrichtung 14 wird ein Füllstoff, beispielsweise Talkum, zudosiert. Des weiteren werden durch die Zuführ-Öffnung 16 Glas-Rovings 17 zugeführt und in den Extruder 1 eingezogen und schonend zu langen Faserabschnitten zerschnitten. Durch die Entgasungs-Öffnung 19 erfolgt eine Entgasung des compoundierten Polymers, das ausgepreßt wird. Die Compoundierung im Extruder 1 erfolgt grundsätzlich kontinuierlich, während die Weiterverarbeitung auf den nachgeordneten Verarbeitungs-Einheiten diskontinuierlich erfolgt. Beim Ausführungsbeispiel nach Fig. 1 wird der als Schmelze-Strang 38 ausgetragene Kunststoff mittels der Schneide-Einheit 21 zerschnitten und in Form von Schmelze-Platten 39 taktweise der Presse 26 zugeführt, wo die Platten in üblicher Weise verformt werden.

Damit die Platten 39 entsprechend dem Takt der Presse 26 hergestellt werden, wird auch der Extruder 1 mit allen zugehörigen Einheiten taktweise betrieben, d.h. nur wenn eine Schmelze-Platte 39 durch Abschneiden vom Schmelze-Strang 38 erzeugt werden soll, wird auch ein Schmelze-Strang 38 extrudiert. Die Schnecken 5 und die erste Dosiereinrichtung 10 und die zweite Dosiereinrichtung 14 werden also nur angetrieben, wenn ein zur Erzeugung einer Schmelze-Platte 39 erforderlicher Schmelze-Strang 38 extrudiert werden soll.

In Fig. 3 ist der Ablauf dargestellt. Die Taktzeit der Presse 26 ist mit t_{T} bezeichnet. Die Taktzeit t_{E} des Extruders ist auf jeden Fall kleiner als t_{T}, damit die Platten 39 vereinzelt der Presse 26 zugeführt werden können. Wesentlich ist, wie sich aus Fig. 3 ergibt, daß die Hochfahrzeit t_{H} und die Bremszeit t_{B} für den Motor 6 und die Motoren 12 und 15 jeweils gleich sind, so daß auch das Hochfahren der Schnecken 5 auf die volle Betriebsdrehzahl und das Hochfahren vom Stillstand der Dosiereinrichtungen 10 und 14 auf die volle Betriebsdrehzahl und entsprechend auch das Herunterfahren auf Stillstand absolut synchron erfolgen. Auf diese Weise ist es möglich, daß der Extruder 1 mit konstantem Füllgrad gefahren wird und daß der Compoundierprozeß völlig gleichmäßig verläuft. Die jeweilige Ansteuerung erfolgt vom Takt der Spritzgießmaschine 30, worüber auch der Antrieb 22 der Schneide-Einheit 21 und der Motor 24 der Transport-Einrichtung 23 angesteuert werden.

Die Ausführungsform nach Fig. 2 unterscheidet sich hinsichtlich der Betriebsweise des Extruders nicht von der Ausführungsform nach Fig. 1; die Ansteuerung des Motors 6 und des ersten Dosier-Motors 12 und des zweiten Dosier-Motors 15 erfolgt hier allerdings von der Spritzgießmaschine 30 her, und zwar entweder von dem Ausstoßantrieb 37 oder dem Motor 33.

Allen Ausführungsbeispielen ist gemeinsam, daß die im Extruder 1 compoundierte Schmelze nicht abkühlt und vor der Zuführung zur Verarbeitungs-Einheit oder in der Verarbeitungs-Einheit erneut aufgeheizt werden muß, sondern daß sie mit der im Extruder 1 aufgenommenen Wärme weiterverarbeitet werden kann.

Für die Taktzeiten t_{T} gilt t_{T} ≤ 5 min. und bevorzugt t_{T} ≤ 2 min. und besonders bevorzugt t_{T} ≤ 40 sec.

## Patentansprüche

1. Anlage zur Aufbereitung und Weiterverarbeitung von thermoplastischem Kunststoff,
- mit einer Schnecken-Compoundier-Maschine (1), die
- - ein Gehäuse (2),
- - mindestens eine in dem Gehäuse (2) angeordnete Schnecke (5, 5'),
- - einen mit der mindestens einen Schnecke (5, 5') gekoppelten Elektro-Motor (6) und
- - mindestens eine Dosiereinrichtung (10, 14) mit einem Dosier-Motor (12, 15) aufweist,
- mit einer der Schnecken-Compoundier-Maschine (1) unmittelbar nachgeordneten, taktweise intermittierend mit einer Taktzeit t_{T} antreibbaren Verarbeitungs-Einheit (26, 30),
- - die einen mit der Taktzeit t_{T} betreibbaren Antrieb (28) aufweist, und
- mit einer Steuer-Einheit (29), die mit dem zum Antrieb der mindestens einen Schnecke (5, 5') dienenden Elektro-Motor (6), dem Dosier-Motor (12, 15) der mindestens einen Dosiereinrichtung (10, 14) und dem Antrieb (28) der Verarbeitungs-Einheit (26, 30) verbunden ist, **dadurch gekennzeichnet, dass** die Steuer-Einheit
-- zur intermittierenden Ansteuerung des Elektro-Motors (6) und des mindestens einen Dosier-Motors (12, 15) mit der Taktzeit t_{T} der Verarbeitungs-Einheit (26, 30) nur dann, wenn ein Schmelzestrang extrudiert werden soll, ausgebildet ist,
-- wobei die Steuer-Einheit (29) so ausgebildet ist, dass der Elektro-Motor (6) zum Antrieb der mindestens einen Schnecke (5, 5') und der mindestens eine Dosier-Motor (12, 15) identische Hochfahrzeiten t_{H} haben und
-- wobei die Steuer-Einheit (29) so ausgebildet ist, dass der Elektro-Motor (6) zum Antrieb der mindestens einen Schnecke (5, 5') und der mindestens eine Dosier-Motor (12, 15) identische Bremszeiten t_{B} haben.

2. Anlage nach Anspruch 1, wobei die Steuer-Einheit (29) derart ausgebildet ist, dass für die Taktzeit t_{T} gilt: t_{T} ≤ 5 min.

3. Anlage nach Anspruch 2, wobei die Steuer-Einheit (29) derart ausgebildet ist, dass für die Taktzeit t_{T} gilt: t_{T} ≤ 2 min.

4. Anlage nach Anspruch 3, wobei die Steuer-Einheit (29) derart ausgebildet ist, dass für die Taktzeit t_{T} gilt: t_{T} ≤ 40 sec.

5. Anlage nach einem der Ansprüche 1 bis 4, wobei die Schnecken-Compoundier-Maschine ( 1 ) eine erste Dosiereinrichtung (10) und eine zweite Dosiereinrichtung (14) aufweist.

6. Anlage nach einem der Ansprüche 1 bis 5, wobei die Schnecken-Compoundier-Maschine (1) eine Zuführung (16) für Rovings (17) aufweist.

7. Anlage nach einem der Ansprüche 1 bis 6, wobei die Verarbeitungs-Einheit als Kolben-Spritzgießmaschine (30) ausgebildet ist.

8. Anlage nach einem der Ansprüche 1 bis 6, wobei die Verarbeitungs-Einheit als Presse (26) ausgebildet ist.

9. Anlage nach Anspruch 8, wobei der Schnecken-Compoundier-Maschine (1) eine taktweise antreibbare Schneide-Einheit (21) nachgeordnet ist.

10. Anlage nach Anspruch 8 oder 9, wobei der Presse (26) eine taktweise antreibbare Transport-Einrichtung (23) vorgeordnet ist.

11. Anlage nach Anspruch 1, wobei die Schnecken-Compoundier-Maschine (1) als Doppel-Schnecken-Maschine ausgebildet ist.

12. Anlagen nach Anspruch 1, wobei die Schnecken-Compoundier-Maschine (1) als Doppel-Schnecken-Extruder ausgebildet ist.

13. Verfahren zum Betrieb einer Anlage nach einem der Ansprüche 1 bis 12, **dadurch gekennzeichnet,**
**dass** der Elektro-Motor (6) und der mindestens eine Dosier-Motor (12, 15) mit der Taktzeit t_{T} der Verarbeitungseinheit (26, 30) angesteuert wird.

14. Verfahren nach Anspruch 13, wobei der Elektro-Motor (6) zum Antrieb der mindestens einen Schnecke (5, 5') und der mindestens eine Dosier-Motor (12, 15) mit identischen Hochfahrzeiten t_{H} angesteuert werden.

15. Verfahren nach Anspruch 13 oder 14, wobei der Elektro-Motor (6) zum Antrieb der mindestens einen Schnecke (5, 5') und der mindestens eine Dosier.Motor (12, 15) mit identischen Bremszeiten t_{B} angesteuert werden.

## Claims

1. An installation for the treatment and further processing of thermoplastics, comprising
- a screw-type compounding unit (1), which has
-- a housing (2),
-- at least one screw (5, 5') disposed in the housing (2),
-- an electric motor (6) coupled with the at least one screw (5, 5'), and
-- at least one metering device (10, 14) with a metering motor (12, 15);
- a processing unit (26, 30) directly downstream of the screw-type compounding unit (1) and intermittently drivable at a cycle time t_{T},
-- which has a drive (28) to be actuated at a cycle time t_{T}, and
- a control unit (29), which is connected with the electric motor (6) that serves for actuation of the at least one screw (5, 5'), with the metering motor (12, 15) of the at least one metering device (10, 14) and with the drive (28) of the processing unit (26, 30), **characterized**
**in that** the control unit
-- is formed for intermittently triggering the electric motor (6) and the at least one metering motor (12, 15) by the cycle time t_{T} of the processing unit (26, 30) if and only if a melt strand is to be extruded,
-- wherein the control unit (29) is formed such that the electric motor (6) for actuation of the at least one screw (5, 5') and the at least one metering motor (12, 15) have identical run-up times t_{H}, and
-- wherein the control unit (29) is formed such that the electric motor (6) for actuation of the at least one screw (5, 5') and the at least one metering motor (12, 15) have identical deceleration times t_{B}.

2. An installation according to claim 1, wherein the control unit (29) is formed such that t_{T} ≤ 5 min. applies to the cycle time t_{T}.

3. An installation according to claim 2, wherein the control unit (29) is formed such that t_{T} ≤ 2 min. applies to the cycle time t_{T}.

4. An installation according to claim 3, wherein the control unit (29) is formed such that t_{T} ≤ 40 sec. applies to the cycle time t_{T}.

5. An installation according to one of claims 1 to 4, wherein the screw-type compounding unit (1) comprises a first metering device (10) and a second metering device (14).

6. An installation according to one of claims 1 to 5, wherein screw-type compounding unit (1) comprises an inlet (16) for rovings ( 17).

7. An installation according to one of claims 1 to 6, wherein the processing unit is a plunger-injection molding machine (30).

8. An installation according to one of claims 1 to 6, wherein the processing unit is a press (26).

9. An installation according to claim 8, wherein intermittently drivable cutting unit (21) is disposed downstream of the screw-type compounding unit (1).

10. An installation according to claim 8 or 9, wherein an intermittently drivable conveying device (23) is disposed upstream of the press (26).

11. An installation according to claim 1, wherein the screw-type compounding unit (1) is a twin-screw machine.

12. An installation according to claim 1, wherein the screw-type compounding unit (1) is a twin-screw extruder.

13. A method for the operation of an installation according to one of claims 1 to 12, **characterized**
**in that** the electric motor (6) and the at least one metering motor (12, 15) are triggered by the cycle time t_{T} of the processing unit (26, 30).

14. A method according to claim 13, wherein electric motor (6) for actuation of the at least one screw (5, 5') and the at least one metering motor (12, 15) are triggered by identical run-up times t_{H}.

15. A method according to claim 13 or 14, wherein the electric motor (6) for actuation of the at least one screw (5, 5') and the at least one metering motor (12, 15) are triggered by identical deceleration times t_{B}.

## Revendications

1. Installation pour la préparation et le traitement ultérieur d'une matière thermoplastique,
- avec un compoundeur à vis (1) qui comporte
-- un bâti (2),
-- au moins une vis (5, 5') disposée dans le bâti (2),
-- un moteur électrique (6) couplé avec la vis (5, 5') minimum et
-- au moins un dispositif de dosage (10, 14) avec un moteur de dosage (12, 15),
- avec une unité de traitement ultérieur (26, 30) pouvant être entraînée par cycles intermittents avec un temps de cycle t_{T}, située directement en aval du compoundeur à vis (1),
-- qui comporte un entraînement (28) pouvant fonctionner avec le temps de cycle t_{T}
et
- avec une unité de commande (29) qui est reliée au moteur électrique (6) servant à entraîner la vis (5, 5') au minimum, au moteur de dosage (12, 15) du dispositif de dosage (10, 14) au minimum et à l'entraînement (28) de l'unité de traitement ultérieur (26, 30), **caractérisée en ce que** l'unité de commande
-- pour l'amorçage intermittent du moteur électrique (6) et du moteur de dosage (12, 15) minimum avec le temps de cycle t_{T} de l'unité de transformation ultérieure (26, 30) n'est réalisée que lorsqu'un boudin de masse fondue doit être extrudé,
-- l'unité de commande (29) étant réalisée de telle manière que le moteur électrique (6) pour l'entraînement de la vis (5, 5') minimum et le moteur de dosage (12, 15) minimum ont des temps de démarrage t_{H} identiques et
-- l'unité de commande (29) étant réalisée de telle manière que le moteur électrique (6) pour l'entraînement de la vis (5, 5') minimum et le moteur de dosage (12, 15) minimum ont des temps de freinage t_{B} identiques.

2. Installation selon la revendication 1,
l'unité de commande (29) étant réalisée de telle manière que ce qui suit est valable pour le temps de cycle t_{T} : t_{T} ≤ 5 min.

3. Installation selon la revendication 2,
l'unité de commande (29) étant réalisée de telle manière que ce qui suit est valable pour le temps de cycle t_{T} : t_{T} ≤ 2 min.

4. Installation selon la revendication 3,
l'unité de commande (29) étant réalisée de telle manière que ce qui suit est valable pour le temps de cycle t_{T} : t_{T} ≤ 40 sec.

5. Installation selon l'une des revendications 1 à 4,
le compoundeur à vis (1) comportant un premier dispositif de dosage (10) et un deuxième dispositif de dosage (14).

6. Installation selon l'une des revendications 1 à 5,
le compoundeur à vis (1) comportant un dispositif d'alimentation (16) pour les rovings (17).

7. Installation selon l'une des revendications 1 à 6,
l'unité de traitement ultérieur étant réalisée comme machine d'injection à piston (30).

8. Installation selon l'une des revendications 1 à 6,
l'unité de traitement ultérieur étant réalisée comme presse (26).

9. Installation selon la revendication 8,
une unité de coupe (21) pouvant être entraînée de manière cyclée étant située en aval du compoundeur (1).

10. Installation selon la revendication 8 ou 9,
un dispositif de transport (23) pouvant être entraîné de manière cyclée étant situé en amont de la presse (26).

11. Installation selon la revendication 1,
le compoundeur à vis (1) étant réalisé comme machine à double vis.

12. Installation selon la revendication 1, le compoundeur à vis (1) étant réalisé comme extrudeuse à double vis.

13. Procédé pour le fonctionnement d'une installation selon l'une des revendications 1 à 12, **caractérisé en ce que**
le moteur électrique (6) et le moteur de dosage (12, 15) minimum sont amorcés avec le temps de cycle t_{T} de l'unité de traitement ultérieur (26, 30).

14. Procédé selon la revendication 13,
le moteur électrique (6) pour l'entraînement de la vis (5, 5') minimum et le moteur de dosage (12, 15) minimum étant amorcés avec des temps de démarrage t_{H} identiques.

15. Procédé selon la revendication 13 ou 14,
le moteur électrique (6) pour l'entraînement de la vis minimum (5, 5') et le moteur de dosage (12, 15) minimum étant amorcés avec des temps de freinage t_{B} identiques.
